# EUROPÄISCHE PATENTSCHRIFT

(11) **EP 1 095 548 B1**
(45) Veröffentlichungstag und Bekanntmachung des Hinweises auf die Patenterteilung: **26.02.2003**
(21) Anmeldenummer: 00123249.5
(22) Anmeldetag: 26.10.2000
(51) Int. Cl.: A01B 59/00, A01D 34/66, A01B 71/06

(54) **Führungseinrichtung für eine Landmaschine**
Guiding device for agricultural machine
Dispositif de guidage pour machine agricole

(30) Priorität: 29.10.1999 DE 29919025 U
(43) Veröffentlichungstag der Anmeldung: 02.05.2001
(73) Patentinhaber: Fella-Werke GmbH & Co. KG, 90537 Feucht bei Nürnberg (DE)
(72) Erfinder: Kohl, Bernhard, 90537 Feucht (DE); Pürrer, Josef, 90537 Feucht (DE)
(74) Vertreter: Grünecker, Kinkeldey, Stockmair & Schwanhäusser Anwaltssozietät

(56) Entgegenhaltungen:
- EP-A- 0 678 237
- NL-A- 8 700 863
- US-A- 4 848 069
- US-A- 5 199 249

## Beschreibung

Die Erfindung bezieht sich auf eine Führungseinrichtung der im Oberbegriff des Anspruchs 1 angegebenen Art (siehe z.B. US-A-5199249).

Damit auch in unebenem Gelände eine bestimmte, gleichmäßige Schnitthöhe eingehalten wird, ist es erforderlich, dass die Mähwerkzeuge in einer bestimmten Höhe über die Geländeunebenheiten hinweggeführt werden. Dazu werden Mähwerke an ihren Traggestellen oder Fahrrahmen höhenbeweglich angeordnet und über Stützelemente (Gleitkufen) auf der Geländeoberfläche abgestützt. Für die höhenbewegliche Anordnung werden vorzugsweise Gelenkvierecksanordnungen unterschiedlicher Ausführungen, wie z.B. nach dem DE-GM 89 06 546.8, 87 01 093 oder DE-OS 30 22 742 verwendet. Bei Kurvenfahrt undloder Schichtlinienarbeit am Hang können hohe Seitenkräfte auftreten, welche die Lenker auf Biegung beanspruchen und zu einem Verkanten der Lagerstellen führen können. Zur Vermeidung dieses Nachteils wird in der DE-OS 30 22 742 vorgeschlagen, Kugelgelenke zu verwenden und den seitlichen Pendelweg durch Anschlagflächen zu begrenzen. Durch die Reibung an diesen Flächen kann jedoch die Bodenanpassung erschwert werden.

Weiterhin ist es bekannt, bei Mähwerken, welche für Straßenfahrt von einer seitlich ausragenden Arbeitsstellung in eine Transportstellung hinter den Schlepper geschwenkt werden, sogenannte Schwenkgetriebe zu verwenden. Diese Getriebeeinheit besteht aus zwei hintereinander geschalteten Winkelgetrieben, welche koaxial zu ihrer Verbindungswelle zueinander drehbar gelagert sind. Eine Getriebehälfte ist fest mit dem Anbaurahmen verbunden, die andere ist so am Mähwerk angelenkt, dass die Abtriebswelle immer in Richtung der Antriebswelle des Mähwerkes weist. Dadurch ist ein Verschwenken des Mähwerkes gegenüber dem Anbaurahmen möglich. Auch wenn beim Ansprechen einer Auffahrsicherung das Mähwerk in Transportstellung schwenkt, bleibt der Antrieb voll funktionsfähig.

Bei einer aus EP 0 678 237 A bekannten Landmaschine umfasst die Führungseinrichtung für die Arbeitseinheit vertikal schwenkbare Lenker zwischen der Arbeitseinheit und dem Tragrahmen. Diese Lenker stützen die Arbeitseinheit auch gegen Seitenbewegungen ab, d.h. gegen Bewegungen in Längsrichtung des Tragrahmens. Das an der Deichsel angebrachte Winkelschwenkgetriebe stellt die Antriebsverbindung zur Arbeitseinheit her. Der drehbare Getriebeteil wird durch die Drehmomentstütze in seiner Drehstellung relativ zur Arbeitseinheit eingestellt, unabhängig davon, welche Schwenkstellung das Traggestell relativ zum Tragrahmen hat. Die Drehmomentstütze ist am drehbaren Getriebeteil um eine horizontale Achse schwenkbar und durchsetzt an der Arbeitseinheit ein Schiebelager, so dass die Drehmomentstütze keine in Schieberichtung durch das Schiebelager gerichteten Kräfte überträgt.

Bei einer aus US-A-4 848 069 bekannten Landmaschine ist eine Parallelogrammanordnung zur Abstützung einer Arbeitseinheit vorgesehen, wobei die Gelenke als Schwenkgelenke bezeichnet werden.

Bei einer aus US-A-5 483 789 bekannten Landmaschine ist die Arbeitseinheit in einer Querführung hin- und herschiebbar, wobei eine Querverstellung der Arbeitseinheit über einen Lenker erfolgt. Die Gelenke des Parallelogramms sind Schwenkgelenke.

Bei einer aus EP 0 429 381 A bekannten Landmaschine sind in einer Parallelogrammanordnung Kugelgelenke vorgesehen, die ein definiertes Gelenkzentrum besitzen und allseitige Bewegungen zulassen.

Bei einer aus EP 0 475 480 A bekannten Landmaschine sind in einer Parallelogrammstruktur Kugelgelenke vorgesehen. Der Bewegungsbereich in diesen Kugelgelenken wird in Querrichtung durch eine Stabilisierstange begrenzt, die direkt an einem Lagerbock des Tragrahmens abgestützt ist.

Der Erfindung liegt die Aufgabe zugrunde, eine Führungseinrichtung für eine Landmaschine anzugeben, bei der baulich einfach die Arbeitseinheit gegen Seitenbewegungen stabil abgestützt bzw. geführt und der drehbare Getriebeteil stets in eine günstige Drehstellung eingestellt werden.

Die gestellte Aufgabe wird mit den Merkmalen des Anspruchs 1 gelöst.

Die Anlenkverbindung zwischen der Arbeitseinheit und dem Tragrahmen braucht keine nennenswerten Seitenkräfte aufzunehmen. Dies ist insbesondere bei langen oder schweren Arbeitseinheiten von Vorteil, die hohe Seitenkräfte erzeugen. Die Seitenkräfte werden nämlich durch den Querlenker am Traggestell des Tragrahmens abgestützt. Dies vermeidet beispielsweise Kollisionen bei gewollten oder zufälligen Annäherungen der Arbeitseinheit an die Schlepperräder. Der Querlenker übernimmt als Drehmomentstütze eine zusätzliche Funktion, weil er gleichzeitig den drehbaren Getriebeteil stets in der für die Arbeitseinheit günstigsten Drehstellung hält, wodurch sich kurze Schiebewege für die Gelenkwelle zur Arbeitseinheit ergeben, die den Verschleiß gering halten. Die Lagerstelle zwischen den Getriebeteilen des Winkelschwenkgetriebes kann so stark ausgelegt sein, dass auch hohe Führungskräfte des Querlenkers in das Traggestell übertragen werden können.

Wenn sich der Querlenker von der Arbeitseinheit zum Bereich der Hochachse erstreckt, um welche der Tragrahmen relativ zum Traggestell verschwenkbar ist, wobei die Drehachse des drehbaren Getriebeteils zumindest in etwa mit der Hochachse fluchtet, resultieren aus Schwenkbewegungen des Tragrahmens keine oder nur vernachlässigbare Seitenbewegungen der Arbeitseinheit.

Der Querlenker sollte im mittleren Arbeitshöhenbereich der Arbeitseinheit in etwa waagrecht liegen. Diese Konfiguration stellt sicher, dass bei Höhenbewegungen der Arbeitseinheit im zumeist eingehaltenen Arbeitshöhenbereich nahezu keine Seitenbewegungen entstehen bzw. bei Höhenbewegungen der Arbeitseinheit aus dem mittleren Arbeitshöhenbereich heraus die initiierten Seitenbewegungen geringfügig bleiben.

Besonders zweckmäßig ist der Querlenker in der Arbeitseinheit allseits gelenkig angelenkt, hingegen am drehbaren Getriebeteil mit einer definierten, vorzugsweise waagrechten Gelenkachse. Auf diese Weise nimmt der Querlenker Reaktionsmomente des Winkelschwenkgetriebes auf und hält er einen Abtriebsstummel für die vom Getriebeteil zur Arbeitseinheit verlaufende Gelenkwelle in einer günstigen Richtung, die kleine Knickwinkel und, kurze Verschiebewege für die Gelenkwelle sicherstellt. Außerdem werden die Reaktionskräfte der Arbeitseinheit in Seitenrichtung optimal über das Winkelschwenkgetriebe auf das Traggestell übertragen.

Der Erfindungsgegenstand wird anhand der Zeichnung erläutert. Es zeigen:
- Fig. 1: eine perspektivische Ansicht einer Landmaschine, die als Mähwerk ausgebildet ist, in der Arbeitsposition,
- Fig. 2: eine Perspektivansicht der Landmaschine in der Transportstellung, und
- Fig. 3: eine perspektivische Ansicht der Anlenkverbindung zwischen der Arbeitseinheit und dem Tragrahmen und einer Führungseinrichtung,

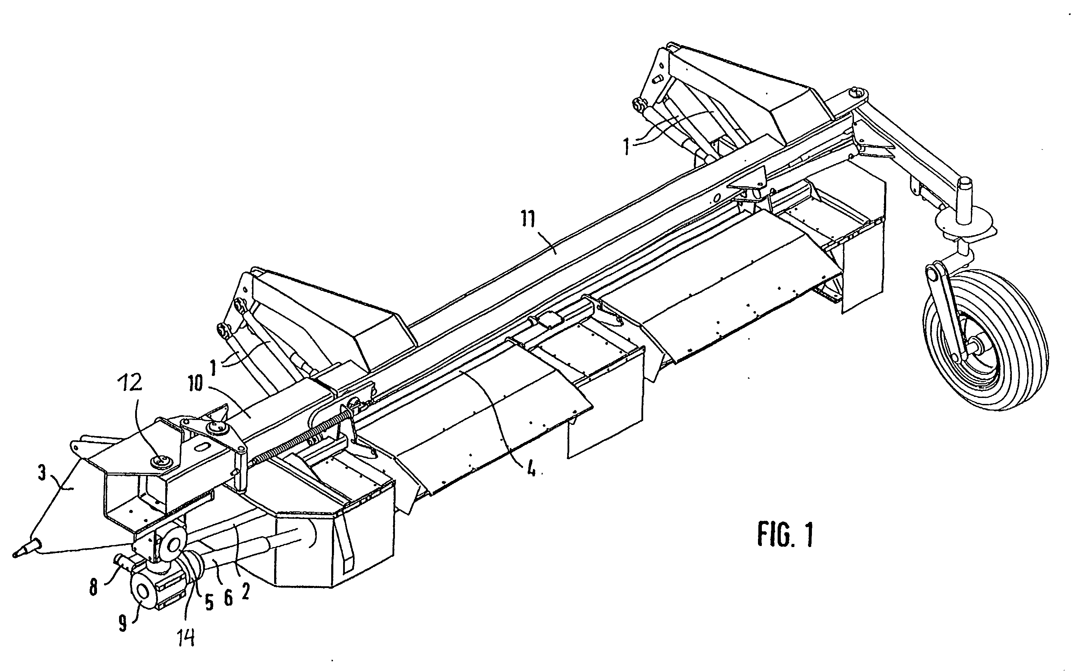

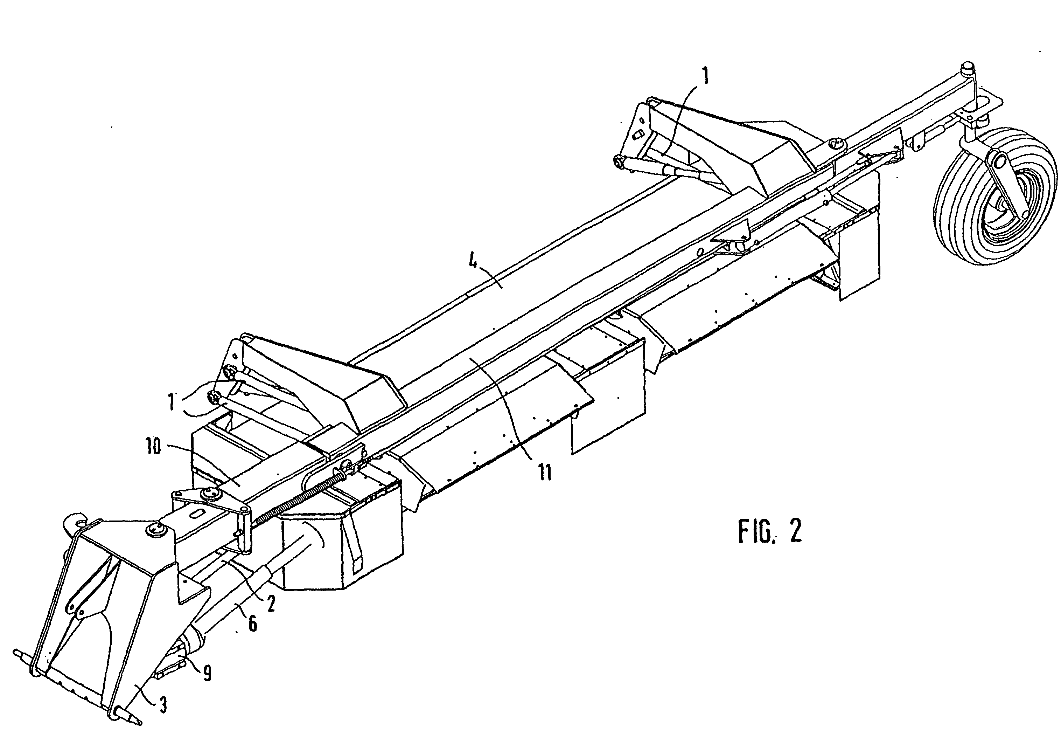

Eine in Fig. 1 und 2 in der Arbeitsstellung bzw. in der Transportstellung gezeigte Landmaschine wird mit einem Traggestell 3 an einen nicht gezeigten Schlepper angebaut. Am Traggestell 3 ist um eine Hochachse 12 wenigstens ein Tragrahmen 10, 11 schwenkbar. Am Tragrahmen 10, 11 ist eine als Mäheinheit ausgebildete Arbeitseinheit 4 über Gelenkvierecke 1 mit Kugelgelenken höhenverstellbar gelagert. Zur Seitenführung der Arbeitseinheit 4 ist wenigstens ein Querlenker 2 vorgesehen, welcher einerseits mit dem Traggestell 3 des Tragrahmens 10, 11 und andererseits mit der Arbeitseinheit 4 gelenkig verbunden ist. Der Querlenker 2 soll möglichst lang sein und bei mittlerer Arbeitshöhe der Arbeitseinheit 4 annähernd waagrecht und rechtwinklig zur Fahrtrichtung liegen, damit bei Höhenbewegungen der Arbeitseinheit 4 keine oder nur geringe Seitenbewegungen in Querrichtungen auftreten. Das freie Ende des Tragrahmens 10, 11 ist über ein Bodenlaufrad abgestützt. An der Unterseite des Traggestells ist ein Winkelschwenkgetriebe 5 mit einem unteren, drehbaren Getriebeteil 9 vorgesehen. Die Drehachse des Getriebeteils 9 fluchtet zumindest in etwa mit der Hochachse 12. Die Lagerstelle des drehbaren Getriebeteils 9 im Winkelgetriebe ist stark ausgebildet. Ein Abtriebsstummel 14 des drehbaren Getriebeteils 9 ist über eine Gelenkwelle 6 mit der Arbeitseinheit 4 in Antriebsverbindung. Der Querlenker 2 gehört zur Führungseinrichtung der Arbeitseinheit 4 und ist am drehbaren Getriebeteil 9 über eine waagrechte Gelenkachse 8 angelenkt.

In der in Fig. 1 gezeigten Arbeitsstellung ist der Tragrahmen 10, 11 um 90° zu einer Seite relativ zum nicht gezeigten Schlepper ausgeschwenkt und durch eine nur zeichnerisch angedeutete Verriegelungseinrichtung festgelegt. Der Querlenker 2, der die Seitenkräfte der Arbeitseinheit 4 über das Winkelschwenkgetriebe 5 auf das Traggestell 3 überträgt, ist vorteilhafterweise in etwa parallel zur Gelenkwelle 6. Dadurch wird bei Höhenbewegungen der Arbeitseinheit 4 die Längenveränderung der Gelenkwelle 6 gering gehalten und wird Verschleiß von Schiebeteilen vermieden. Der Querlenker 2 nimmt das Reaktionsmoment des drehbaren Getriebeteils 9 auf und sorgt dafür, dass dessen Abtriebsstummel 14 sowohl in Arbeitsstellung (Fig. 1) als auch in Transportstellung (Fig. 2) in Richtung zur Antriebswelle der Arbeitseinheit 4 weist.

In der in Fig. 2 gezeigten Transportstellung ist der Tragrahmen 10, 11 in Fahrtrichtung ausgerichtet. Die Arbeitseinheit 4 ist angehoben.

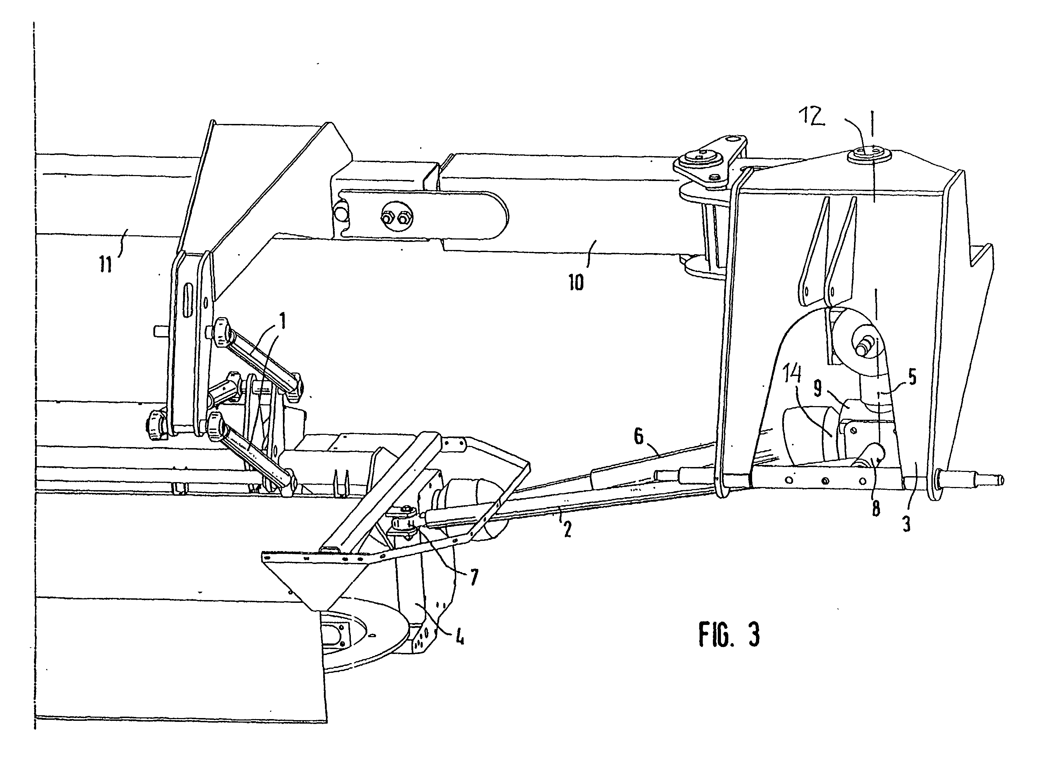

In Fig. 3 (Arbeitsstellung) ist erkennbar, dass der von der Anlenkverbindung mit den Gelenkvierecken 1 mit ihren Kugelgelenken unabhängige Querlenker nicht nur die Seitenkräfte der Arbeitseinheit 4 am Traggestell 3 abstützt, sondern zugleich auch als Drehmomentstütze für den drehbaren Getriebeteil 9 des Winkelschwenkgetriebes 5 ausgestaltet ist. Zu diesem Zweck ist am Querlenker 2 nur auf der Seite der Arbeitseinheit 4 ein Kugelgelenk 7 vorgesehen, während am anderen Ende des Querlenkers 2 die waagrechte Gelenkachse 8 die Verbindung mit dem drehbaren Getriebeteil 9 herstellt.

## Patentansprüche

1. Führungseinrichtung für eine Landmaschine, die wenigstens einen mit einem Traggesteil (3) an einen Schlepper oder dgl. anbaubaren, relativ zum Traggestell (3) um eine Hochachse (12) verschwenkbaren Tragrahmen (10, 11) und wenigstens eine daran über Verbindungselemente (1) höhenbeweglich angelenkte Arbeitseinheit (4) aufweist, wobei am Traggestell ein Winkelschwenkgetriebe (5) mit einem drehbaren Getriebeteil (9) angeordnet ist, dessen Drehstellung über eine Drehmomentstütze einstellbar ist, **dadurch gekennzeichnet, dass** die Verbindungselemente (1) in der Anlenkverbindung zwischen der Arbeitseinheit (4) und dem Tragrahmen (10, 11) auch relative Seitenbewegungen zwischen der Arbeitseinheit (4) und dem Tragrahmen (10, 11) zulassen, dass zur seitlichen Führung der Arbeitseinheit (4) in Richtung dieser Seitenbewegungen wenigstens ein von der Anlenkverbindung unabhängiger Querienker (2) jeweils gelenkig mit der Arbeitseinheit (4) und dem Traggestell (3) des Tragrahmens (10, 11) verbunden ist, und dass der Querlenker (2) zusätzlich die die Drehstellung des drehbaren Getriebeteils (9) einstellbare Drehmomentstütze bildet

2. Führungseinrichtung nach Anspruch 1, **dadurch gekennzeichnet, dass** sich der Querlenker (2) von der Arbeitseinheit (4) zum Bereich der Hochachse (12) erstreckt

3. Führungseinrichtung nach Anspruch 1 und 2, **dadurch gekennzeichnet, dass** der Querlenker (2) im mittleren Arbeitshöhenbereich der Arbeitseinheit (4) in etwa waagrecht liegt, damit bei Höhenbewegungen der Arbeitseinheit keine oder nur geringfügige Querbewegungen entstehen.

4. Führungseinrichtung nach Anspruch 1, **dadurch gekennzeichnet, dass** die Drehachse des Getriebeteils (9) zumindest in etwa mit der Hochachse (12) fluchtet

5. Führungseinrichtung nach wenigstens einem der Ansprüche 1 bis 4, **dadurch gekennzeichnet, dass** der Querlenker (2) mit einem Ende an der Arbeitseinheit (4) allseits gelenkig angelenkt und mit seinem anderen Ende um nur eine, vorzugsweise waagrechte, Gelenkachse (8) schwenkbar mit dem drehbaren Getriebeteil (9) verbunden ist, so dass der Querlenker (2) das Reaktionsmoment des Winkelschwenkgetriebes (5) aufnimmt, einen Abtriebsstummel (14) des drehbaren Getriebeteils (9) in eine für eine vom Getriebeteil (9) zur Arbeitseinheit (4) verlaufende Gelenkwelle (6) günstige Richtung einstellt und in den Seitenbewegungsrichtungen auftretende Reaktionskräfte der Arbeitseinheit über das Winkelschwenkgetriebe (5) auf das Traggestell (3) überträgt.

## Claims

1. Guiding device for an agricultural machine, which device has at least one carrying frame (10, 11) which can be attached to a tractor or the like with the aid of a carrying structure (3) and can be swivelled, relative to the said carrying structure (3), about a vertical axle (12), and at least one working unit (4) which is linked to the said carrying frame in a vertically movable manner via connecting elements (1), there being disposed on the said carrying structure an angular pivoting transmission (5) with a rotatable transmission part (9) whose rotational position can be set via a torque support, **characterised in that** the connecting elements (1) in the linking connection between the working unit (4) and the carrying frame (10, 11) also permit relative lateral movements between the said working unit (4) and carrying frame (10, 11); that, for the lateral guidance of the working unit (4) in the direction of the said lateral movements, at least one transverse guide rod (2) in each case, which is independent of the linking connection, is connected to the working unit (4) and the carrying structure (3) of the carrying frame (10, 11) in an articulated manner; and that the transverse guide rod (2) additionally forms the torque support which sets the rotational position of the rotatable transmission part (9).

2. Guiding device according to claim 1, **characterised in that** the transverse guide rod (2) extends from the working unit (4) to the region of the vertical axle (12).

3. Guiding device according to claims 1 and 2, **characterised in that** the transverse guide rod (2) lies approximately horizontally in the central region of the working height of the working unit (4), so that no transverse movements, or only slight ones, occur during vertical movements of the said working unit.

4. Guiding device according to claim 1, **characterised in that** the axis of rotation of the transmission part (9) is in at least approximate alignment with the vertical axle (12).

5. Guiding device according to at least one of claims 1 to 4, **characterised in that** the transverse guide rod (2) is linked, by one end, to the working unit (4) in a universally articulated manner and is connected, by its other end, to the rotatable transmission part (9) so as to be pivotable about only one, preferably horizontal, articulating axle (8), so that the said transverse guide rod (2) absorbs the moment of reaction of the angular pivoting transmission (5), sets an output stub (14) of the rotatable transmission part (9) in a direction which is favourable for an articulated shaft (6) running from the transmission part (9) to the working unit (4), and transmits forces of reaction of the working unit which occur in the directions of lateral movement, to the carrying structure (3) via the angular pivoting transmission (5).

## Revendications

1. Dispositif de guidage pour machine agricole, qui comprend au moins un châssis support (10, 11), qui peut être assemblé au moyen d'un cadre porteur (3) contre un tracteur ou un dispositif analogue et qui peut pivoter par rapport au cadre porteur (3) autour d'un axe vertical (12), et au moins une unité de travail (4) à hauteur réglable pouvant être assemblée de manière articulée contre ledit châssis support au moyen d'éléments d'assemblage (1), sachant qu'un mécanisme d'orientation angulaire (5) muni d'un élément de transmission (9) rotatif, dont la position de rotation peut être régulée au moyen d'un support de couple, est disposé contre le cadre porteur, **caractérisé en ce que** les éléments d'assemblage (1) dans l'assemblage articulé entre l'unité de travail (4) et le châssis support (10, 11) autorisent également des mouvements latéraux relatifs entre l'unité de travail (4) et le châssis support (10, 11), **en ce que**, pour le guidage latéral de l'unité de travail (4) en direction de ces mouvements latéraux, au moins un bras oscillant transversal (2), indépendant de l'assemblage articulé, est assemblé de manière articulée avec l'unité de travail (4) et le cadre porteur (3) du châssis support (10, 11), et **en ce que** le bras oscillant transversal (2) forme en plus le support de couple permettant de réguler la position de rotation de l'élément de transmission (9) rotatif.

2. Dispositif de guidage selon la revendication 1, **caractérisé en ce que** le bras oscillant transversal (2) s'étend de l'unité de travail (4) jusque dans la zone de l'axe vertical (12).

3. Dispositif de guidage selon les revendications 1 et 2, **caractérisé en ce que** le bras oscillant transversal (2) est situé sensiblement horizontalement dans la zone centrale de la hauteur de travail de l'unité de travail (4), afin que des mouvements verticaux de l'unité de travail ne génèrent pas ou seulement de faibles mouvements transversaux.

4. Dispositif de guidage selon la revendication 1, **caractérisé en ce que** l'axe de rotation de l'élément de transmission (9) est aligné au moins sensiblement avec l'axe vertical (12).

5. Dispositif de guidage selon au moins une des revendications 1 à 4, **caractérisé en ce que** le bras oscillant transversal (2) est assemblé avec une extrémité de manière articulée dans tous les sens contre l'unité de travail (4) et est assemblé par son autre extrémité de manière pivotante autour d'un seul axe d'articulation (8), de préférence horizontal, avec l'élément de transmission (9) rotatif, de telle sorte que le bras oscillant transversal (2) absorbe le couple de réaction du mécanisme d'orientation angulaire (5), positionne un tourillon de sortie (14) de l'élément de transmission (9) rotatif dans une direction favorable pour un arbre d'articulation (6), qui s'étend de l'élément de transmission (9) vers l'unité de travail (4), et transmet des forces de réaction de l'unité de travail, générées dans les directions des mouvements latéraux, à partir du mécanisme d'orientation angulaire (5) sur le cadre porteur (3).
